# EUROPEAN PATENT APPLICATION

(11) **EP 4 230 335 A1**
(43) Date of publication of application: **23.08.2023**
(21) Application number: 23153450.4
(22) Date of filing: 26.01.2023
(51) Int. Cl.: B23H 1/06, B23H 9/14

(54) **EDM ELECTRODE WITH ENRICHED SURFACE REGION**

(30) Priority: 28.01.2022 US 202263304129 P
(71) Applicant: Raytheon Technologies Corporation, Farmington, CT 06032 (US)
(72) Inventor: LORICCO, Nicholas M., 06078, Suffield (US); LIU, Xuan, Glastonbury, 06033 (US)
(74) Representative: Dehns

(57) **Abstract**

An electrode (22) includes a metallic electrode body (34) that has a surface region (34b) that is enriched in at least one of aluminum or chromium. The aluminum and/or chromium that is vaporized from the surface region (34b) suppresses vaporization loss of aluminum or chromium from the machined surface of a metallic workpiece during electric discharge machining.

## Description

### BACKGROUND

Electrical discharge machining (EDM) is a process in which material is removed from a workpiece by electric current discharge between an electrode and the workpiece. The electric current discharge removes material from the workpiece by melting and/or vaporizing the material. For instance, gas turbine engine components, such as turbine vanes and blades, utilize EDM to form channels and cooling holes.

### SUMMARY

From a first aspect, there is provided an electrode that includes a metallic electrode body having an exterior surface region that is enriched in at least one of aluminum or chromium.

In an embodiment of the foregoing, the metallic electrode body includes an interior region underlying the surface region, and the surface region has a greater amount of combined aluminum and chromium than the interior region by at least 5% by weight.

In a further embodiment of any of the foregoing, the metallic electrode body includes an interior region underlying the surface region, and the surface region has a greater amount of combined aluminum and chromium than the interior region by at least 10% by weight.

In a further embodiment of any of the foregoing, the metallic electrode body includes an interior region underlying the surface region, and the surface region has a greater amount of combined aluminum and chromium than the interior region by at least 25% by weight.

In a further embodiment of any of the foregoing, the exterior surface region is enriched in aluminum.

In a further embodiment of any of the foregoing, the exterior surface region is enriched in chromium.

In a further embodiment of any of the foregoing, the exterior surface region is enriched in aluminum and chromium.

In a further embodiment of any of the foregoing, metallic electrode body is formed of a copper-based alloy.

In a further embodiment of any of the foregoing, the metallic electrode body includes an interior region underlying the surface region, and the surface region has a greater amount of combined aluminum and chromium than the interior region by at least 5% by weight.

In a further embodiment of any of the foregoing, the exterior surface region is enriched in aluminum.

In a further embodiment of any of the foregoing, the exterior surface region is enriched in chromium.

In a further embodiment of any of the foregoing, the exterior surface region is enriched in aluminum and chromium.

There is also provided a method of machining that includes providing a metallic workpiece that is formed of an alloy that has a composition that includes at least one of aluminum or chromium, providing an electrode that includes a metallic electrode body that has a surface region that is enriched in at least one of aluminum or chromium, bringing the electrode into proximity of the metallic workpiece, and providing a voltage differential across the metallic workpiece and the electrode. The voltage differential causes an electric arc that removes material from the metallic workpiece and vaporizes at least a portion of the surface region of the electrode. The at least one of aluminum or chromium that is vaporized from the surface region suppresses vaporization loss of aluminum or chromium from the metallic workpiece.

In a further embodiment of any of the foregoing, the metallic electrode body includes an interior region underlying the surface region, and the surface region has a greater amount of combined aluminum and chromium than the interior region by at least 25% by weight.

In a further embodiment of any of the foregoing, the surface region is enriched in aluminum and chromium, and the metallic electrode body is formed of a copper-based alloy.

There is also provided a machine, which the Applicant expressly reserves the right to claim independently, that includes a metallic electrode body having a surface region that is enriched in at least one of aluminum or chromium, a fixture for holding a metallic workpiece, an actuator operable to move the electrode relative to the fixture, and a power source operably connected with the electrode and the fixture to provide a voltage differential across the electrode and the metallic workpiece.

In a further embodiment of any of the foregoing, the metallic electrode body includes an interior region underlying the surface region, and the surface region has a greater amount of combined aluminum and chromium than the interior region by at least 25% by weight.

In a further embodiment of any of the foregoing, the surface region is enriched in aluminum and chromium, and the metallic electrode body is formed of a copper-based alloy.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a machine for electric discharge machining.
Figure 2 illustrates a sectioned view of an electrode of the machine.
Figure 3 illustrates an example electrode that is solid.
Figure 4 illustrates an example electrode that has a combed geometry.

### DETAILED DESCRIPTION

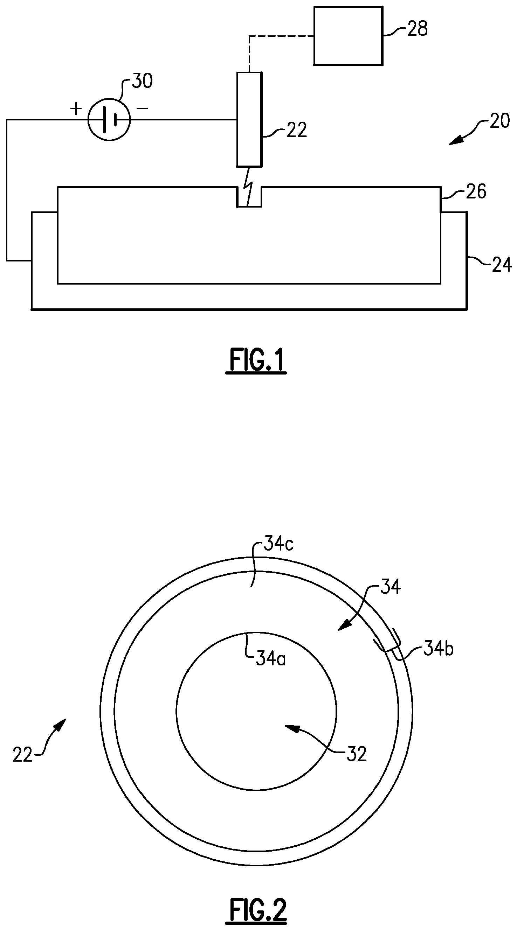

Figure 1 schematically illustrates a machine 20 that is operable for electric discharge machining (EDM) of metallic components such as, but not limited to, gas turbine engine components. In general, the machine 20 includes an electrode 22, a fixture 24 for holding a metallic workpiece 26, an actuator 28, a power source 30, and a dielectric fluid (not shown). The actuator 28 is operable to move the electrode 22 relative to the fixture 24 and workpiece 26. The power source 30 is operably connected with the electrode 22 and the fixture 24 to provide a voltage differential across the electrode 22 and the metallic workpiece 26. As will be appreciated by those of ordinary skill in the art, the machine 20 may include additional components related to the operation and control thereof and the description of which is not necessary for the understanding of this disclosure.

The EDM process involves bringing the electrode 22 into proximity of the metallic workpiece 26 while submerged in the dielectric fluid and then providing a voltage differential across the metallic workpiece 26 and the electrode 22. The voltage differential causes a breakdown of the dielectric fluid and a formation of an electric arc that removes material from the metallic workpiece 26 as well as from the electrode 22. The electric arcing is cycled to ultimately form a hole or slot, for example. As material is removed, the actuator 28 moves the electrode 22 in order to remove additional material.

Components such as gas turbine engine components are often formed of metallic alloys that contain alloying elements that serve for corrosion protection. For instance, nickel- and cobalt-based superalloys often contain aluminum and/or chromium that form oxide scales at a rate significantly slower than that of other constituent elements in the alloy. The material removal mechanism of the EDM process on such a superalloy may cause localized depletion of aluminum and/or chromium in the machined surface zone of the workpiece. As a result, the machined surface zone may not have the same level of oxidation and/or corrosion resistance as the base alloy. As will be discussed below, the electrode 22 is configured in a way to increase the amount of aluminum and/or chromium present in the machined surface zone of the workpiece after machining.

Figure 2 illustrates a sectioned view of the electrode 22. In the example shown, the electrode 22 is a cylindrical annulus that circumscribes a flow passage 32. The flow passage 32 serves to provide clean dielectric fluid during the EDM process for flushing the vicinity of the workpiece that is being machined. As will be appreciated, the electrode 22 is not limited to the geometry shown and may alternatively have other geometries, several of which are shown and described below.

The electrode 22 has a metallic electrode body 34 that defines an inner surface 34a that borders the flow passage 32, an outer surface region 34b, and an interior region 34c that underlies the surface region 34b. The metallic electrode body 34 is formed of a base alloy. For example, the base alloy is a copper-based alloy but is not limited thereto. The surface region 34b of the electrode body 34 is enriched in at least one of aluminum or chromium. For example, the surface region 34b may have a thickness of up to approximately 0.1 millimeters. The term "enriched" used herein means that the surface regions contains, by weight, a higher amount of aluminum and/or chromium than the base alloy in the interior region 34c. For instance, the surface region 34b has a greater amount of combined aluminum and chromium than the interior region 34c by at least 5%, at least 10%, or at least 25%. In a further example, the base alloy has less than 0.05% of combined aluminum and chromium, and the surface region 34b has at least 10% of combined aluminum and chromium (e.g., all aluminum, all chromium, or a combination of aluminum and chromium).

The enriched element, aluminum and/or chromium, is selected in dependence upon the composition of the alloy of the workpiece and the desired composition along the working surface after machining. For instance, if the alloy of the workpiece requires a minimum weight percent of aluminum for oxidation/corrosion resistance but does not require additional chromium, an electrode 22 with a surface region 34b that is enriched in a majority aluminum would be used. Likewise, if the alloy of the workpiece requires a minimum weight percent of chromium for oxidation/corrosion resistance but does not require additional aluminum, an electrode 22 with a surface region 34b that is enriched in a majority chromium would be used. And if the alloy of the workpiece requires both aluminum and chromium for the required oxidation and corrosion resistance, an electrode 22 with a surface region that is enriched in aluminum and chromium would be used.

The technique used to enrich the surface region 34b with the aluminum and/or chromium is not particularly limited except that the selected technique should not substantially degrade the performance of the electrode 22, or cause a reduction in quality of the machined feature created on the work part. Example enrichment processes may include, but are not limited to, hot dipping, low temperature aluminizing and/or chromating, and plating.

During the EDM process, the electrode 22, including the aluminum and/or chromium in the enriched surface region 34b, also vaporizes as an electrical arc forms between the electrode 22 and the workpiece 26. Without wishing to be bound by a particular theory, it is thought that the vaporized aluminum and/or chromium creates an elevated partial pressure of aluminum and/or chromium in the localized vicinity of the machined surface zone of the workpiece 26. The elevated partial pressure serves to suppress depletion of aluminum and/or chromium from the machined surface of the workpiece 26, thereby preserving the original amount of the aluminum and/or chromium in the surface zone. In this manner, the oxidation and corrosion performance of the workpiece at the surface zone is maintained. Additionally or alternatively, the vaporized aluminum and/or chromium from the surface region 34b may deposit onto the machined surface zone of the workpiece 26, thereby either replenishing lost aluminum and/or chromium or providing additional aluminum and/or chromium for oxidation and corrosion protection.

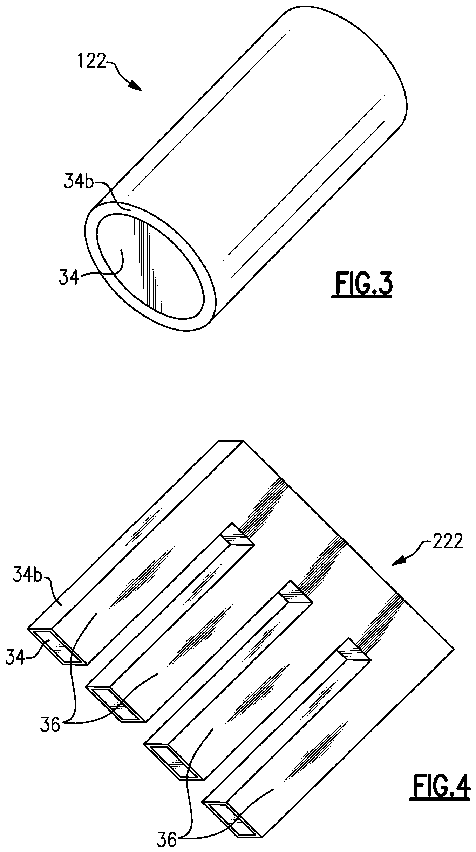

As indicated above, the electrode may have other geometries. In this disclosure, like reference numerals designate like elements where appropriate and reference numerals with the addition of one-hundred or multiples thereof designate modified elements that are understood to incorporate the same features and benefits of the corresponding elements. For example, Figure 3 illustrates an electrode 122 in which the metallic electrode body 34 has a solid cylindrical geometry (with no flow passage 32). Figure 4 illustrates another example electrode 222 in which the metallic electrode body 34 has a combed geometry with parallel spaced-apart fingers 36 for forming multiple holes side-by-side.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An electrode (22; 122; 222) comprising:
a metallic electrode body (34) having an exterior surface region (34b) that is enriched in at least one of aluminum or chromium.

2. The electrode as recited in claim 1, wherein the metallic electrode body (34) includes an interior region (34c) underlying the surface region (34b), and the surface region (34b) has a greater amount of combined aluminum and chromium than the interior region (34c) by at least 5% by weight.

3. The electrode as recited in claim 1, wherein the metallic electrode body (34) includes an interior region (34c) underlying the surface region (34b), and the surface region (34b) has a greater amount of combined aluminum and chromium than the interior region (34c) by at least 10% by weight.

4. The electrode as recited in claim 1, wherein the metallic electrode body (34) includes an interior region (34c) underlying the surface region (34b), and the surface region (34b) has a greater amount of combined aluminum and chromium than the interior region (34c) by at least 25% by weight.

5. The electrode as recited in any preceding claim, wherein the exterior surface region (34b) is enriched in aluminum.

6. The electrode as recited in any preceding claim, wherein the exterior surface region (34b) is enriched in chromium.

7. The electrode as recited in any preceding claim, wherein the exterior surface region (34b) is enriched in aluminum and chromium.

8. The electrode as recited in any preceding claim, wherein metallic electrode body (34) is formed of a copper-based alloy.

9. A machine (20) comprising:
the electrode (22) of any preceding claim;
a fixture (24) for holding a metallic workpiece (26);
an actuator (28) operable to move the electrode (22) relative to the fixture (24); and
a power source (30) operably connected with the electrode (22) and the fixture (24) to provide a voltage differential across the electrode (22) and the metallic workpiece (26).

10. A method of machining comprising:
providing a metallic workpiece (26) that is formed of an alloy that has a composition that includes at least one of aluminum or chromium;
providing an electrode (22; 122; 222) that includes a metallic electrode body (34) that has a surface region (34b) that is enriched in at least one of aluminum or chromium;
bringing the electrode (22; 122; 222) into proximity of the metallic workpiece (26); and
providing a voltage differential across the metallic workpiece (26) and the electrode (22), the voltage differential causing an electric arc that removes material from the metallic workpiece (26) and vaporizes at least a portion of the surface region (34b) of the electrode (22; 122; 222), wherein the at least one of aluminum or chromium that is vaporized from the surface region (34b) suppresses vaporization loss of aluminum or chromium from the metallic workpiece (26).

11. The method as recited in claim 10, wherein the metallic electrode body (34) includes an interior region (34c) underlying the surface region (34b), and the surface region (34b) has a greater amount of combined aluminum and chromium than the interior region (34c) by at least 25% by weight.

12. The method as recited in claim 10 or 11, the surface region (34b) is enriched in aluminum and chromium, and the metallic electrode body (34) is formed of a copper-based alloy.
